# FASCICULE DE BREVET EUROPEEN

(11) **EP 3 547 616 B1**
(45) Date de publication et mention de la délivrance du brevet: **20.08.2025**
(21) Numéro de dépôt: 19163866.7
(22) Date de dépôt: 19.03.2019
(51) Int. Cl.: H04L 12/28, H04N 21/41

(54) **PROCÉDÉ DE GESTION D'UN DISPOSITIF ÉLECTRONIQUE**
VERFAHREN ZUR VERWALTUNG EINER ELEKTRONISCHEN VORRICHTUNG
METHOD FOR MANAGING AN ELECTRONIC APPARATUS

(30) Priorité: 30.03.2018 FR 1852829
(43) Date de publication de la demande: 02.10.2019
(73) Titulaire: Orange, 92130 Issy-les-Moulineaux (FR)
(72) Inventeur: BRUNEL, Jean Laurent, 92326 CHATILLON (FR); ATHIAS, Isabelle, 92326 CHATILLON (FR)

(56) Documents cités:
- EP-A2- 2 661 019
- US-A1- 2014 087 660
- US-A1- 2016 226 676
- US-A1- 2017 175 317

## Description

### Domaine technique

La présente invention concerne le domaine de l'électronique. Plus particulièrement, la présente invention concerne l'interopérabilité de dispositifs électroniques pour faire bénéficier un dispositif électronique des fonctionnalités d'un autre dispositif électronique, appelé ici terminal, disposant d'un moyen de restitution de données pour un utilisateur.

### Etat de la technique

Certains dispositifs électroniques, comme par exemple les passerelles domestiques (ou « Box » en terminologie anglo-saxonne), les décodeurs numériques (ou « Set Top Box » en terminologie anglo-saxonne), les objets domestiques connectés (réfrigérateurs, radiateurs électriques, etc.), possèdent un petit écran, ou en sont dépourvus. Il est donc difficile de connaître leurs données internes (état, capacités, modes de contrôle, etc.) et d'interagir avec eux pour les piloter.

Il existe des solutions et des normes associées pour déporter une interface utilisateur d'un dispositif vers un terminal dans le contexte du réseau local. Par exemple, le protocole RVU (pour « Remote view »), basé sur les normes UPnP (de l'anglais « Universal Plug and Play ») et DLNA (de l'anglais « Digital Living Network Alliance »), qui permettent de partager des contenus audiovisuels entre les serveurs de contenus et les terminaux d'un réseau domestique, propose des spécifications techniques autorisant une restitution fidèle des interfaces utilisateurs sur les différents dispositifs du réseau. Le document US 2014/0108677 A1 décrit par exemple un système dans lequel un terminal d'un réseau local peut se connecter à un dispositif maître pour recevoir une description du dispositif via un protocole de réseau local (UPnP).

Cependant, le but recherché par ces solutions étant de déporter l'affichage du dispositif en vue d'une surveillance, d'une restitution ou d'une commande à distance (par exemple pour piloter les radiateurs, ou la *box,* depuis l'extérieur de la maison, visualiser un contenu audiovisuel sur un PC, etc.), le terminal mobile et le dispositif communiquent via un réseau de communication (réseau local et/ou étendu). Or certains appareils ne sont pas connectés à un réseau de communication (par exemple un réfrigérateur disposant de capacités « intelligentes » peut être connecté ou non au réseau local de la maison). Pour d'autres, bien qu'ils soient connectés au réseau de communication (par exemple via une passerelle domestique), il n'est pas toujours souhaitable de les contrôler ou d'obtenir leurs données internes via ce réseau, notamment pour des raisons de simplicité : le contrôle d'un dispositif du réseau local suppose de le connaître (via, par exemple, une étape de découverte).

De surcroît ce type de solution, fortement distribuée, présente souvent des problèmes d'interopérabilité.

Selon un autre exemple, la demande US 2002/0130834 décrit un procédé permettant à un utilisateur de contrôler des dispositifs électroniques via un terminal, par exemple un PC, équipé d'un écran. Les dispositifs électroniques sont représentés schématiquement sur l'écran du terminal ; lorsque l'utilisateur sélectionne un dispositif, ses données d'interface sont transmises au terminal et affichées sur son écran par un programme de simulation, pour permettre à l'utilisateur de contrôler le dispositif. Un tel système nécessite une étape de découverte des dispositifs, afin de pouvoir les proposer à l'utilisateur. Ce type de solution peut présenter des problèmes d'interopérabilité entre les dispositifs. De surcroît, le choix de l'appareil à contrôler est fait sur le terminal, ce qui implique une intelligence (programmes dédiés, etc.) et une charge supplémentaire sur ce terminal, ainsi qu'une certaine complexité pour l'utilisateur qui doit effectuer lui-même un certain nombre d'opérations fastidieuses. Cette approche orientée terminal n'est pas toujours souhaitable.

Il est aussi connu d'obtenir de telles données automatiquement via une liaison sans fils point à point. La demande WO2017055715 décrit un procédé de gestion locale d'un dispositif électronique par un terminal, dans lequel les données internes du dispositif sont reçues automatiquement par le terminal lorsque ce dernier entre dans la portée du dispositif. Cette solution présente l'inconvénient d'une éventuelle fausse détection si l'utilisateur approche involontairement son terminal du dispositif. Pour pallier ce problème, le demandeur propose dans un mode de réalisation de détecter un mouvement volontaire de l'utilisateur. L'analyse de ce mouvement volontaire suppose cependant l'introduction d'une intelligence spécifique (logicielle ou matérielle) du côté du mobile et/ou du dispositif et reste parfois difficile à détecter de manière fiable. D'autres exemples de procédés de gestion de dispositifs électroniques sont connus des demandes de brevet US 2017/175317 A1, US 2014/087660 A1, EP 2 661 019 A2, ainsi que US 2016/226676 A1.

L'invention offre une solution ne présentant pas les inconvénients de l'état de la technique.

### L'invention

A cet effet, selon un aspect fonctionnel, l'invention a pour objet un procédé de gestion d'un dispositif apte à communiquer avec plusieurs terminaux d'utilisateur, les terminaux étant aptes à traiter et restituer des données associées au dispositif via une application de restitution, le procédé étant mis en œuvre par un processeur, le procédé comportant, sur le dispositif, une étape de transmission aux terminaux d'une commande d'activation de l'application de restitution des données, et en réponse à la transmission de la commande d'activation, une étape de réception d'une donnée d'identité d'un terminal pour valider l'accès du terminal au dispositif, et une étape de transmission desdites données audit terminal si l'accès est validé.

Aujourd'hui, les terminaux mobiles (*smartphones,* tablettes, etc.) sont équipés d'un processeur et de capacités de restitution confortables ; ils peuvent être avantageusement utilisés pour une restitution, par exemple l'affichage, de données issues d'un autre dispositif.

Par données associées au dispositif électronique, on entend l'ensemble des informations relatives à la configuration, l'état, les statistiques, et plus généralement toutes les données d'usage du dispositif, accessibles par le dispositif. Notamment, ces données concernent des données d'interface utilisateur, c'est-à-dire des données qui sont restituées à l'utilisateur dans le but de lui faire connaître une information (configuration, état, etc.) et le cas échéant de communiquer avec le dispositif et d'apporter des modifications à certaines de ces données paramétrables. Il peut s'agir ici, indifféremment d'une interface textuelle (utilisant des caractères semi-graphiques pour afficher les menus, les boites de dialogue, des messages, ou tout autre élément à destination de l'utilisateur), d'une interface graphique (pour laquelle les objets à manipuler sont présentés sous forme de pictogrammes sur lesquels l'usager peut imiter des manipulations physiques), d'une interface de type Web (une interface graphique d'une application Web, se manipulant à l'aide d'un navigateur Web), ou encore d'une interface vocale, etc.

Ces données associées au dispositif, que l'on appellera dans la suite « données d'interface utilisateur » sans perte de généralité, peuvent être mémorisées dans une mémoire quelconque du dispositif (interne de type RAM ou ROM, externe dans le réseau ou sur une clé USB, etc.) Avantageusement, l'invention offre l'avantage d'activer une application sur le terminal, à partir du dispositif, pour afficher automatiquement les données d'interface sur le terminal.

Ainsi selon l'invention, c'est le dispositif qui prend l'initiative de lancer l'application du terminal et de lui envoyer les informations qui lui semblent pertinentes ; l'intelligence, c'est-à-dire le choix des données à transmettre, reste donc du côté du dispositif. Avantageusement, on peut ainsi bénéficier de la même application pour tous les dispositifs et le terminal se comporte de manière passive.

L'invention permet aussi aux fabricants de dispositifs d'éviter de mettre des écrans à capacité limitée sur ou à proximité des dispositifs, ce qui entraîne une réduction des coûts de production et des impacts environnementaux du dispositif, tout en proposant une meilleure expérience à l'utilisateur en utilisant un terminal performant disponible chez lui (smartphone, tablette, PC, TV, etc).

Selon un mode de mise en œuvre particulier de l'invention, un procédé de gestion tel que décrit ci-dessus est en outre caractérisé en ce que l'étape de transmission desdites données est précédée d'une étape d'établissement d'une session de communication en point à point avec le terminal pour la transmission des données.

Ce mode de mise en œuvre de l'invention permet d'assurer une gestion fiable du dispositif : la communication en point à point limite la connaissance des données échangées au dispositif électronique et au terminal. Avantageusement, le dispositif n'a pas besoin d'être connecté à un réseau local. Avantageusement encore, les données ne sont pas nécessairement transmises sur un réseau de communication mais uniquement échangées entre les deux appareils (terminal et dispositif). Ainsi, les données échangées sur la session en point à point ne peuvent pas être interceptées par un autre dispositif, qui se trouverait par exemple en espion sur le réseau local.

Selon un autre mode de mise en œuvre particulier de l'invention, un procédé de gestion tel que décrit ci-dessus est en outre caractérisé en ce que l'étape de transmission desdites données est précédée d'une étape de connexion du dispositif et du terminal à un même réseau local utilisé pour la transmission des données.

Ce mode de mise en œuvre de l'invention permet d'assurer une gestion simple de la communication entre le dispositif et le terminal. En effet si les deux équipements sont déjà connectés, via une passerelle de service (Box) au même réseau local, les données peuvent être échangées sur ce réseau local sans autre étape d'établissement d'une communication entre les deux équipements. Les données peuvent être simplement « poussées » vers le terminal cible du réseau local, qui est connu du dispositif électronique et/ou de sa passerelle, ou diffusées vers plusieurs terminaux.

Selon un autre mode de mise en œuvre particulier de l'invention, un procédé de gestion tel que décrit ci-dessus est en outre caractérisé en ce que l'étape de transmission d'une commande d'activation est précédée d'une étape d'obtention d'une demande de transmission de données associées au dispositif, ladite demande résultant d'une interaction entre l'utilisateur et le dispositif

Avantageusement, ce mode de réalisation offre ainsi l'avantage de déporter une interface d'utilisateur sur un tel terminal mobile (e.g. un *smartphone)* en effectuant simplement une action sur le dispositif, cette action entraînant le réveil de l'application sur le terminal. On remarquera par ailleurs que :
- Dans le contexte de l'invention, il n'est pas utile que le dispositif soit connecté au réseau local. Avantageusement, l'utilisateur s'affranchit ainsi d'une étape de découverte, puisqu'il lui suffit d'effectuer une action sur le dispositif. De plus, le terminal et le dispositif peuvent être déconnectés, pendant la mise en œuvre de l'invention, de tout réseau de communication.
- Il n'est pas utile non plus que le terminal se trouve à proximité du dispositif. On peut par exemple imaginer une tablette ou un écran de télévision disposé dans une pièce et apte à restituer les données d'interface utilisateur de tous les équipements de cette pièce. Il suffira que l'utilisateur effectue une action sur le dispositif pour que son interface soit transférée vers la tablette et/ou le téléviseur.

Selon un autre mode de mise en œuvre particulier de l'invention, qui pourra être mis en œuvre cumulativement ou alternativement avec les précédents, le procédé est caractérisé en ce que ladite interaction est une action sur un actionneur du dispositif.

Par « actionneur » on entend toute partie du dispositif qui permet de convertir l'énergie reçue en travail utile pour exécuter la tâche de détection d'une action sur le dispositif : bouton, vérin, aimant, enceinte acoustique, thermomètre, etc.

Avantageusement selon ce mode, une action simple de l'utilisateur, par exemple une pression sur un bouton du dispositif, l'approche d'un aimant, etc. peut déclencher la préparation des données d'interface. De nombreux dispositifs sont déjà équipés de tels boutons (Par exemple, une Box comprend un certain nombre de boutons en façade) et ne nécessitent donc pas de modification matérielle.

Selon un autre mode de mise en œuvre particulier de l'invention, qui pourra être mis en œuvre cumulativement ou alternativement avec les précédents, le procédé est caractérisé en ce que ladite interaction est une détection de présence de l'utilisateur par un capteur du dispositif.

Avantageusement selon ce mode, le simple fait pour l'utilisateur de se rapprocher du dispositif peut déclencher la préparation des données d'interface par activation d'un capteur (de mouvement, de présence, etc.) Ceci peut lui éviter de libérer par exemple une partie de son corps pour appuyer sur un bouton.

Selon un autre mode de mise en œuvre particulier de l'invention, qui pourra être mis en œuvre alternativement ou cumulativement avec les précédents, le procédé est caractérisé en ce que ladite interaction est un branchement sur un connecteur du dispositif.

Avantageusement selon ce mode, le simple fait pour l'utilisateur de connecter un câble, *dongle,* etc. sur un connecteur (ou port) du dispositif, prévu à cet effet, peut déclencher la préparation des données d'interface. Un tel connecteur peut être dédié ou non à cet effet. Il peut s'agir par exemple d'un port USB du dispositif. Deux variantes peuvent se présenter :
- soit l'utilisateur insère un bouchon, *dongle,* câble, etc. dans le port USB et déclenche de ce fait l'envoi des données vers un terminal, par exemple en Wi-Fi.
- soit l'utilisateur branche un câble relié à un terminal, et déclenche de ce fait l'envoi des données vers ce terminal.

Selon un autre mode de mise en œuvre particulier de l'invention, qui pourra être mis en œuvre alternativement ou cumulativement avec les précédents, le procédé est caractérisé en ce que ce ladite interaction est une reconnaissance d'une signature sonore sur le dispositif.

Avantageusement selon ce mode, le simple fait pour l'utilisateur de prononcer une commande vocale, ou de taper dans ses mains, claquer de la langue, etc. peut déclencher la préparation des données d'interface après reconnaissance du signal sonore ainsi généré par un module (microphone, etc.) du dispositif.

Selon un autre aspect fonctionnel, l'invention concerne aussi un procédé de traitement de données associées à un dispositif apte à communiquer avec plusieurs terminaux d'utilisateur, les terminaux étant aptes à traiter et restituer lesdites données via une application de traitement de données, le procédé étant mis en œuvre par un processeur et comportant sur un terminal parmi lesdits plusieurs terminaux :
- une étape de réception d'une commande d'activation de l'application de restitution des données, suivie d'une étape d'envoi d'une donnée d'identité du terminal au dispositif pour valider l'accès du terminal au dispositif, suivie d'une étape d'obtention desdites données en provenance du dispositif, si ledit accès est validé ; et
- une étape de restitution desdites données.

Par « activation » on entend ici le lancement de l'application si celle-ci n'est pas en cours d'exécution sur le terminal, et/ou la mise au premier plan de l'application qui se trouve déjà instanciée (activée) en arrière-plan. Avantageusement, le procédé selon cet aspect fonctionnel met au premier plan l'application de traitement de l'interface, qui prend donc le « focus », ce qui va permettre à l'utilisateur de prendre connaissance des données et de pouvoir interagir avec le dispositif.

Selon un aspect matériel, l'invention concerne également un dispositif électronique apte à communiquer avec plusieurs terminaux aptes à traiter et restituer des données associées au dispositif via une application de restitution, comportant :
- un module de transmission aux terminaux d'une commande d'activation de l'application de restitution des données ;
- un module de réception d'une donnée d'identité d'un terminal parmi lesdits plusieurs terminaux pour valider l'accès du terminal au dispositif ;
- un module de transmission desdites données audit terminal, ledit module de transmission étant configuré pour transmettre lesdites données audit terminal, si ledit accès est validé, après la transmission au terminal de ladite commande d'activation par ledit module de transmission.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.)

Selon un autre aspect matériel, l'invention concerne également une passerelle domestique comportant un dispositif électronique tel que décrit ci-dessus.

Selon un autre aspect matériel, l'invention concerne également un terminal de traitement de données associées à un dispositif, comportant les modules suivant :
- un module de réception d'une commande d'activation d'une l'application de restitution des données ;
- un module d'envoi d'une donnée d'identité du terminal au dispositif pour valider l'accès du terminal au dispositif ;
- un module d'obtention desdites données en provenance du dispositif, ledit module d'obtention étant configuré pour obtenir lesdites données après la réception de ladite commande d'activation par ledit module de réception si ledit accès est validé ; et,
- un module de restitution desdites données.

Selon encore un autre aspect matériel, l'invention concerne un système comprenant un dispositif électronique tel que décrit ci-dessus et au moins un terminal tel que décrit ci-dessus.

Selon un autre aspect matériel, l'invention concerne également un programme d'ordinateur apte à être mis en œuvre pour le procédé de gestion tel que décrit ci-dessus, le programme comprenant des instructions de code qui, lorsque le programme est exécuté par un processeur du dispositif électronique, réalise les étapes du procédé de gestion.

Selon un autre aspect matériel, l'invention concerne également un programme d'ordinateur apte à être mis en œuvre pour le procédé de traitement tel que décrit ci-dessus, le programme comprenant des instructions de code qui, lorsque le programme est exécuté par un processeur du dispositif électronique, réalise les étapes du procédé de traitement.

Ce dispositif de traitement et ce programme d'ordinateur présentent des caractéristiques et avantages analogues à ceux décrits précédemment en relation avec le procédé de gestion d'un dispositif électronique.

Selon encore un autre aspect matériel, l'invention a trait à un support d'enregistrement lisible par un processeur de données sur lequel est enregistré un programme comprenant des instructions de code de programme pour l'exécution des étapes d'un procédé tel que défini ci-dessus.

L'invention sera mieux comprise à la lecture de la description qui suit, donnée à titre d'exemple et faite en référence aux dessins annexés.

### Les figures:

La figure 1 illustre un exemple d'environnement de mise en œuvre selon un mode particulier de réalisation de l'invention.
La figure 2 représente une architecture matérielle d'un dispositif électronique et d'un terminal mobile selon un mode de réalisation.
La figure 3 représente un organigramme illustrant les différentes étapes du procédé sur le dispositif électronique et sur le terminal mobile qui le contrôle, selon un mode de réalisation.
Les figures 4A, 4B illustrent une mise en œuvre de l'invention sur un dispositif de type « Livebox ».

### Description détaillée d'un exemple de réalisation illustrant l'invention

L'invention concerne la gestion de données utilisateur d'un dispositif quelconque par un terminal. Par données utilisateur on entend au sens large toutes les données internes du dispositif. Par la suite, on recourt au terme d'IHM pour Interface Homme-Machine. Par terminal, on entend ici tout équipement électronique apte à recevoir une interface, par exemple graphique, et à la restituer pour un utilisateur, pour permettre à l'utilisateur de prendre connaissance des données du dispositif et éventuellement d'interagir sur le dispositif, par exemple le configurer. Par équipement domestique, on entend ici tout dispositif qui permet à un utilisateur d'interagir via une IHM (passerelle domestique, STB, machine à laver, réfrigérateur, etc.), en particulier les équipements qui ne disposent pas d'écran de taille suffisante pour afficher les données requises.

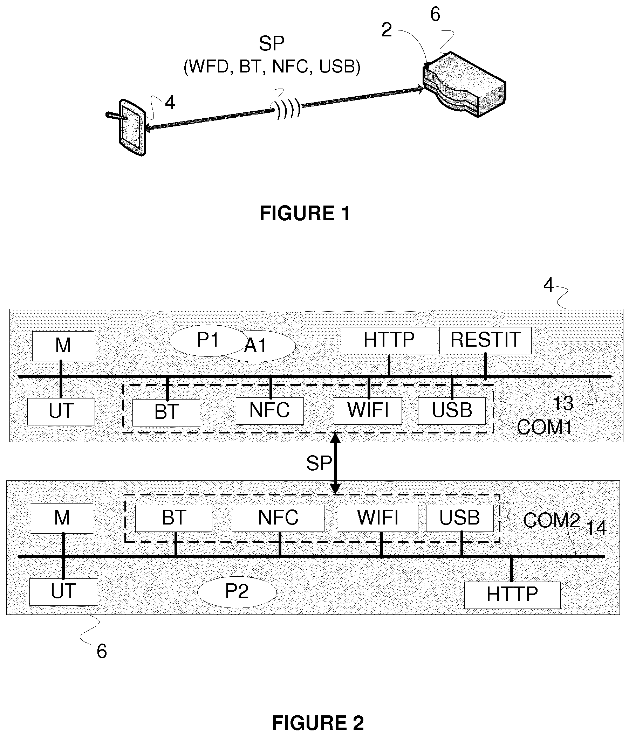

La figure 1 illustre un exemple d'environnement de mise en œuvre selon un mode particulier de réalisation de l'invention. Un tel environnement comprend notamment un dispositif électronique (6) et un terminal (4). Selon ce mode de réalisation, le dispositif électronique est par exemple une passerelle de service (6), le terminal un smartphone (4), et l'interface utilisateur (IHM) à déporter sur le terminal est une interface de gestion de la passerelle.

L'utilisateur souhaite recevoir les données d'IHM du dispositif sur son terminal. A cet effet, il effectue une action sur le dispositif, pour demander la restitution de l'interface sur son terminal. Selon un exemple, il appuie sur un bouton du dispositif. Selon d'autres exemples, il peut déclencher sur le dispositif la reconnaissance d'une signature sonore (voix, claquement de mains, etc.), le toucher, l'effleurer, déclencher un capteur par sa présence, brancher un connecteur sur un port du dispositif (port série USB, port réseau Ethernet, port téléphonique, etc.), lui transmettre une commande depuis un autre équipement du réseau, etc. Selon un autre exemple, un port spécifique (par exemple USB) peut être dédié au transfert des données d'interface et la détection déclenchée par un branchement d'un terminal sur ce port dédié.

Le dispositif vérifie optionnellement qu'il est connecté au terminal, c'est-à-dire qu'il peut échanger des données avec lui. Si ce n'est pas le cas, le dispositif peut, de manière facultative, requérir l'établissement d'une session de communication avec le terminal.

Selon un mode de réalisation, le dispositif et le terminal sont connectés au réseau local (LAN), auquel cas l'étape de vérification peut être omise.

Selon un autre mode de réalisation, le dispositif n'est pas connecté au réseau local (LAN), auquel cas une requête peut être transmise au terminal afin de mettre en œuvre les moyens matériels et logiciels nécessaires à l'établissement de la communication.

Une communication est établie entre le terminal mobile et le dispositif électronique : la communication, que l'on appelle aussi par la suite « session », symbolisée par la double flèche (SP), s'effectue selon cet exemple en mode point à point bidirectionnel. Elle peut être fondée par exemple sur différentes technologies radio et différents protocoles :
- communication en mode dit « ad-hoc » entre deux équipements pourvus d'une fonction Wi-Fi. En mode « ad-hoc », aussi appelé «Wi-Fi-Direct » (WFD), et par opposition au mode « infrastructure », les dispositifs sans fils se connectent les uns aux autres afin de constituer des liaisons point à point (« peer to peer » en anglais), c'est-à-dire un réseau dans lequel chaque dispositif joue en même temps le rôle de client et le rôle de serveur, ou point d'accès. Le mode «Wi-Fi Direct », aussi appelé Wi-Fi P2P (Peer to Peer), est une technologie développée par le consortium «Wi-Fi Alliance » permettant le partage de données entre différents périphériques (ordinateurs, TV, mobiles, etc.) via leur connexion Wi-Fi sans point d'accès Wi-Fi intermédiaire (routeur, passerelle, etc.). Par exemple, selon ce mode de réalisation, le terminal est configuré pour se positionner en mode Wi-Fi (dit « Hotspot » c'est-à-dire qu'il se positionne comme un point d'accès Wi-Fi). Le dispositif électronique, dont le module Wi-Fi est également actif, détecte sa présence et se met en «Wi-Fi direct », ouvrant ainsi une session entre les deux dispositifs. Ce mode de réalisation procure l'avantage de permettre l'échange des données via un canal sécurisé. La technologie Wi-Fi est en effet, de manière générale, bien connue de l'homme du métier pour ses capacités à offrir une bonne sécurité sur le canal si elle est configurée soigneusement. Elle est robuste, fiable et rapide.
- communication de type Bluetooth (BT) ; la technologie Bluetooth est une technologie radio de courte distance destinée à simplifier les connexions entre les appareils électroniques, développée par l'association « Bluetooth SIG ». Elle est particulièrement répandue et utile pour établir une connexion point à point entre appareils proches. Elle est d'utilisation très simple, consomme peu d'énergie et est néanmoins sécurisée.
- communication en champ proche, par exemple de type NFC (Near Field Communication) ; ces communications, basées principalement sur la norme ISO (International Standard Organisation) 14443, utilisent des technologies sans fils pour permettre un échange d'informations entre deux périphériques éloignés d'une courte distance, typiquement inférieure à dix centimètres.
- communication par liaison filaire, par exemple via un câble USB ou Ethernet, etc.

Alternativement, ce canal peut être établi par tous les moyens à la portée de l'homme du métier, qu'ils soient filaires ou sans fils. On peut citer par exemple l'infrarouge (RF), le protocole Zigbee (un protocole qui permet la communication dans des réseaux locaux, sur un lien radio, avec une consommation réduite), la norme « DECT Ultra Low Energy » (en abrégé DECT ULE, une extension de DECT pour les applications à basse énergie), ou encore la norme « Bluetooth Low Energy » (en abrégé BLE), dont le but est de fournir une puissance réduite par rapport aux applications standard de la norme Bluetooth, le protocole LTE (Long Term Evolution ), etc.

Ce type de communication entre les deux dispositifs étant privée, puisque établie en point à point, elle présente un certain nombre d'avantages, notamment en termes de sécurité, mais surtout, il n'est pas nécessaire que les équipements soient connectés à un réseau.

Selon un autre mode de réalisation, la communication peut utiliser un réseau local auquel les deux équipements sont raccordés. Dans ce cas la communication n'est plus strictement « point à point » mais reste établie entre un émetteur (le dispositif) et un récepteur (le terminal).

Selon une variante, ce canal peut être établi en mode de diffusion (broadcast ou multicast) : le dispositif peut facilement diffuser son IHM vers plusieurs terminaux du réseau local.

Selon une autre variante, ce canal peut être établi en mode multiple : plusieurs dispositifs (actionnés par l'utilisateur) peuvent diffuser leur IHM vers un terminal du réseau local, par exemple un écran de télévision dont l'écran serait fractionné pour autoriser la restitution de plusieurs IHM provenant de plusieurs dispositifs.

Lorsque la session est établie, le dispositif électronique peut transmettre les données relatives à son IHM. Le terminal mobile reçoit les données, active l'application, affiche l'interface pour un utilisateur et attend une commande éventuelle de la part de celui-ci (baisser la température, modifier la configuration de la passerelle, etc.)

A la fin de la session de communication, une déconnexion explicite ou implicite peut avoir lieu. La déconnexion est par exemple explicite dans le cas d'une liaison Wi-Fi préalable, car le dispositif électronique ne peut se connecter à la fois en point à point en mode «Wi-Fi Ad-hoc » au terminal mobile et en mode «Wi-Fi infrastructure » à une passerelle de service. Il est donc préférable de le déconnecter. La déconnexion est facultative dans le cas du Bluetooth. La déconnexion de deux dispositifs Bluetooth est généralement implicite (si les deux appareils s'éloignent d'une portée supérieure à la portée maximale permise par la norme). Elle est également facultative dans le cas du NFC car le champ électromagnétique décroît avec la distance, mettant fin naturellement à la communication lorsque le terminal n'est plus dans la portée du dispositif.

La figure 2 représente une architecture matérielle d'un dispositif électronique commandé par un terminal mobile et dudit terminal mobile selon un mode de réalisation.

Le terminal (4) comprend, classiquement, des mémoires M articulées autour d'une unité de traitement (UT) qui comprend par exemple un processeur (CPU, DSP, etc.). Les mémoires peuvent être de type ROM (de l'anglais Read Only Memory) ou RAM (de l'anglais Random Access Memory), amovibles ou fixes, etc. La mémoire vive permet de stocker de manière non durable des données de calcul utilisées lors de la mise en œuvre d'un procédé selon des modes de réalisation. La mémoire non volatile (par exemple du type EEPROM) permet de stocker par exemple un programme d'ordinateur selon un mode de réalisation pour son exécution par un processeur. Il communique avec le dispositif électronique (6) via un module de communication (COM1) qui lui permet de se connecter via un canal radio de type Wi-Fi, Bluetooth (BT), NFC ou encore Zigbee (non représenté), etc. ou une liaison physique. Comme décrit auparavant à l'appui de la figure 1, un canal de communication (SP) est établi selon cet exemple entre les deux dispositifs (4) et (6). On pourrait envisager alternativement une communication multipoint du dispositif vers plusieurs terminaux. Le terminal comporte aussi, selon cet exemple, un module de communication de type HTTP pour assurer les communications de type HTTP, par exemple de type WebSocket (WS) ; on notera qu'une communication de type WS est possible sur un lien Bluetooth. On notera aussi que ce module est facultatif et donné ici uniquement à titre indicatif.

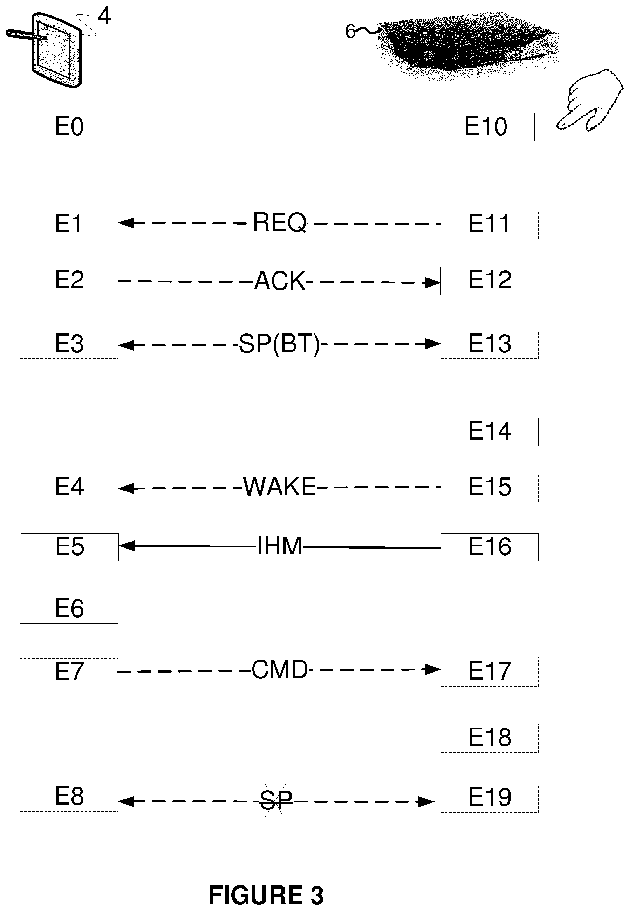

Le module P1, qui peut être logiciel et/ou matériel, est notamment capable d'effectuer les actions qui seront décrites à l'appui de la figure 3, c'est-à-dire l'envoi des requêtes et commandes à destination du dispositif électronique ainsi que le traitement des données d'interface utilisateur, conformément à des procédés selon des modes de réalisation.

Le module applicatif A1, qui peut être logiciel et/ou matériel, est notamment capable de recevoir une commande de la part du dispositif et de lancer si nécessaire l'application P1 de gestion sur réception de cette commande. Il peut être intégré ou non à l'application P1.

En outre, le terminal comporte une interface utilisateur comme par exemple un pavé de touches (non représenté) pour recevoir des commandes d'un utilisateur et une unité de restitution, RESTIT (écran, afficheur, hautparleurs, etc.) pour restituer l'interface utilisateur du dispositif électronique.

Tous ces modules communiquent classiquement entre eux via un bus de données (13).

Le dispositif électronique (6) comprend aussi des mémoires M articulées autour d'une unité de traitement (UT) qui comprend par exemple un processeur (CPU, DSP, etc.). Il se connecte au terminal mobile via la liaison SP en mode Wi-Fi ou Bluetooth, filaire, etc. via son module de communication COM2 apte à communiquer avec le module précédemment décrit COM1.

Il comporte aussi un module (P2) chargé du traitement des informations : obtention d'une information relative à une action de l'utilisateur sur le dispositif, établissement de la communication avec le terminal mobile, réception des commandes de contrôle ou des requêtes de restitution de la part du terminal mobile, préparation (mise en forme, codage, etc.) des données d'interface utilisateur, transmission de l'interface utilisateur au terminal, etc.

Il comporte aussi éventuellement un module de communication de type HTTP.

Tous les modules communiquent classiquement entre eux via un bus de données (14).

La figure 3 représente un organigramme illustrant les différentes étapes du procédé selon un mode de réalisation sur le dispositif électronique (6) et un exemple de procédé correspondant sur le terminal mobile (4).

On rappelle que le but des étapes est de transmettre l'interface utilisateur (IHM) du dispositif au terminal suite à une action de l'utilisateur, par exemple l'appui sur un bouton du dispositif.

Le dispositif électronique est sollicité par l'utilisateur lors de l'étape E10. Par exemple, l'utilisateur presse un bouton du dispositif.

Une étape E11 optionnelle permet au dispositif de transmettre une requête (REQ) de connexion au terminal. Cette requête est utile pour établir une communication dédiée entre le terminal et le dispositif. Elle est facultative dans la mesure où les deux dispositifs peuvent être déjà connectés et aptes à communiquer entre eux, notamment s'ils sont connectés tous les deux au réseau local. Le terminal peut éventuellement acquitter la requête reçue lors d'une étape E2. Cette étape peut servir notamment à une authentification mutuelle des deux dispositifs ou toute autre opération de sécurité.

A l'étape suivante E13 (resp. E3 pour le terminal), une session de communication( SP) est établie entre les deux entités. Selon quelques exemples, le canal utilisé pour la communication est de type NFC, Wi-Fi, Bluetooth, LI-FI (une technologie de transmission de données par un équipement de type LED), USB, etc. La communication peut être établie en point à point entre le terminal et le dispositif via un mécanisme ad-hoc (Bluetooth, Wi-Fi ad-hoc, liaison radio de type LTE, câble physique, etc.) ou via le réseau local si le dispositif et le terminal y sont connectés. Dans les deux cas il s'agit d'une communication entre un émetteur (le dispositif) et un récepteur unique (le terminal). Selon une variante, la communication est établie en mode de diffusion (en anglais Broadcast, ou Multicast). Par exemple, tous les terminaux du réseau local pourraient recevoir une demande de gestion de l'interface du dispositif sur lequel l'action (appui sur un bouton) a été effectuée.

Lors d'une étape E14, le dispositif électronique obtient et prépare les données d'interface utilisateur, par exemple d'interface graphique. Tout moyen à la portée de l'homme du métier peut être envisagé, notamment la lecture dans une mémoire du dispositif ou la préparation de l'interface graphique à partir de données de base.

Les données de l'interface utilisateur (IHM) peuvent être encodées à l'aide d'un langage de balisage (XML, HTML) utilisant une sémantique adaptée à la description des éléments de l'interface utilisateur, avant d'être transmises au terminal. Ceci permet de transmettre simplement au terminal des données facilement affichables, par exemple sous forme de langage XML/HTML, etc. Des données de ce type sont interprétables par la plupart des normes ou standards existants. Il est de surcroît plus facile de s'adapter, avec ce genre de données, aux capacités du terminal.

Les données d'interface utilisateur peuvent être adaptées en fonction des capacités du terminal. Ce mode de mise en œuvre permet d'adapter les données de l'interface graphique aux capacités du terminal qui va les restituer, par exemple en termes d'affichage : si le terminal est doté d'un grand écran, il peut afficher davantage d'informations intelligibles pour l'utilisateur. Si le terminal est au contraire doté d'un petit écran, il est intéressant de lui adresser des données minimales à afficher. Un tel procédé d'adaptation est bien connu de l'homme du métier, par exemple dans les spécifications de la norme RVU précitée. Les capacités du terminal peuvent être par exemple transmises par celui-ci au dispositif lors de l'étape d'établissement de la session de communication.

Lors d'une étape E15, le dispositif électronique transmet au terminal une commande d'activation de l'application de restitution des données (P2).

Le programme A1 reçoit la commande d'activation du terminal. Le programme A1 est soit un programme de délégation à une application tierce, appelée ici P1, auquel cas A1 détermine l'application (P1) du terminal à laquelle correspond la commande, soit le programme P1 en charge du traitement lui-même.

On notera que ce programme A1 peut être une partie du système d'exploitation (OS) du terminal ou un programme dédié s'exécutant sur cet OS.

Puis une commande issue de A1 active et met au premier plan, le cas échéant, l'application P1 sur le terminal. Par « le cas échéant » on entend que si l'application est déjà active en arrière-plan, la commande provoque sa transition vers le premier plan. Si au contraire l'application n'a pas encore été activée (ou instanciée), elle doit être lancée (ou activée, ou instanciée) de manière classique, puis mise au premier plan.

Une application en premier plan dispose par exemple d'une fenêtre d'affichage active qui peut être visualisée et avec laquelle l'utilisateur peut facilement interagir. En d'autres termes, l'application de premier plan « prend le focus ». Elle est capable de restituer les données d'interface et récupérer les actions de l'utilisateur sur le mobile (entrée de texte, appui sur des boutons, des listes, etc.).

Cette application P1 peut être native ou prendre la forme d'un navigateur (en anglais, Browser). Une application native est une application spécialement conçue pour s'exécuter sur un système d'exploitation de périphérique utilisateur (Android, los, etc.) et un *firmware* (logiciel de bas niveau) particuliers. Les applications natives diffèrent donc des applications rendues par le navigateur, requérant pour leur part des éléments ou des instructions téléchargés à partir d'un serveur Web chaque fois qu'ils sont instanciés ou rendus. Les applications basées sur un navigateur et les ressources rendues par le navigateur peuvent être traitées par tous les terminaux compatibles Web dans le navigateur et ne sont donc pas spécifiques au système d'exploitation.

L'étape d'activation peut comporter une sous-étape d'envoi d'une donnée d'identité du terminal dans le but d'identifier et/ou d'authentifier le terminal (et valider ainsi l'accès du terminal au dispositif).

Puis les données de l'interface sont transmises au terminal lors d'une étape E16. Le terminal les reçoit lors d'une étape E5 ; il traite alors ces données lors d'une étape E6 et les restitue : selon cet exemple, il affiche l'interface graphique sur son écran (RESTIT). Selon une variante, il peut s'agir d'une interface Web, d'une interface vocale restituée via un haut-parleur, etc. Le transfert des données peut se faire selon différent protocoles et formats, soit standards (de type HTTP et XML) soit propriétaires, avec tous les niveaux d'abstraction possibles pouvant aller jusqu'à l'envoi de données dans un buffer (« frame buffer ») sous forme brute.

Par exemple, l'application est un browser et reçoit une page Web au format HTML, constituée de boutons, listes, éléments graphiques, etc. avec lesquels l'utilisateur peut interagir.

L'unité de traitement du terminal émet optionnellement une ou des données (commandes, informations, etc.) lors d'une étape E7 (CMD), via son module de communication. Le module de traitement du dispositif reçoit la donnée (E17) et opère des traitements pour la convertir en action effective sur le dispositif (mémoriser une nouvelle valeur de paramètre, baisser la température, modifier la configuration de la Box, réduire la vitesse d'un moteur, etc.) lors d'une étape E18.

Une fois que l'interface utilisateur a été reçue et exploitée par l'utilisateur, la session point à point (SP) peut être optionnellement refermée lors d'une étape E19 (resp. E8 sur le terminal). La fermeture de la session permet aux deux dispositifs de pouvoir quitter le mode point à point pour établir par exemple une autre session.

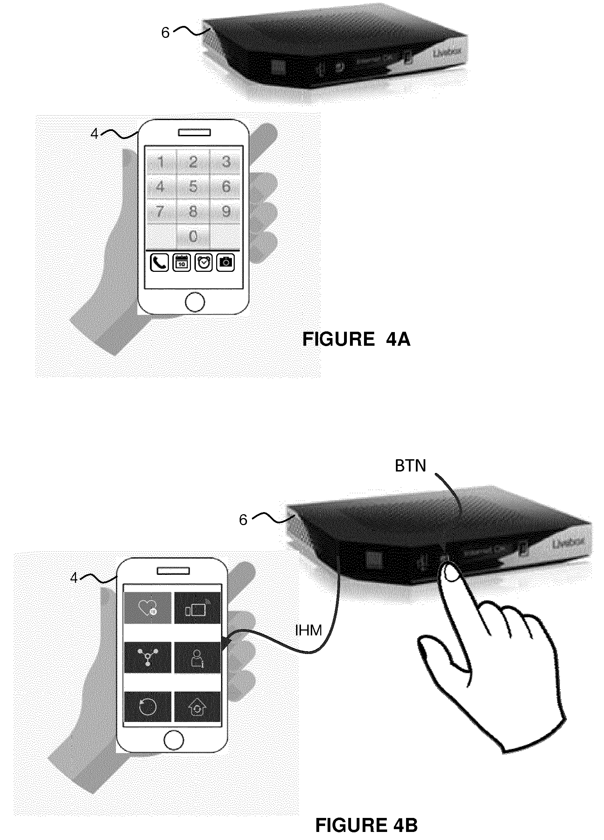

Les figures 4A et 4B illustrent une mise en œuvre de l'invention sur un dispositif de type « Box ».

Sur la figure 4A, l'utilisateur du smartphone 4, qu'il tient selon cet exemple à la main, souhaite récupérer des informations de la Box 6 (état, programmes, configuration, etc.). Son smartphone dispose d'un écran qui affiche une application quelconque (ici un pavé numérique).

Sur la figure 4B, il presse un bouton BTN de la Box (par exemple le bouton « info » disponible en façade avant de la Livebox de l'opérateur Orange). Cette dernière transmet alors des données d'interface au terminal qui met au premier plan l'interface après avoir éventuellement activé/mis au premier plan l'application de traitement des interfaces. L'utilisateur peut alors interagir avec l'une des applications proposées à l'écran (pictogrammes de la figure 4b sur l'écran du terminal 4) pour prendre connaissance de l'état de sa box, lui communiquer des données ou des commandes, etc.

Il va de soi que le mode de réalisation qui a été décrit ci-dessus a été donné à titre purement indicatif et nullement limitatif.

## Revendications

1. Procédé de gestion d'un dispositif (6) apte à communiquer avec plusieurs terminaux (4) d'utilisateur, les terminaux étant aptes à traiter et restituer des données (IHM) associées au dispositif via une application de restitution, le procédé étant mis en oeuvre par un processeur, le procédé comportant sur le dispositif,
- une étape de transmission aux terminaux d'une commande d'activation de l'application de restitution des données (P2),
- en réponse à la transmission de la commande d'activation, une étape de réception d'une donnée d'identité d'un terminal pour valider l'accès du terminal au dispositif, et
- une étape de transmission (E16) desdites données (IHM) audit terminal, si ledit accès est validé.

2. Procédé selon la revendication 1, **caractérisé en ce que** l'étape de transmission (E16) desdites données est précédée d'une étape d'établissement (E11, E12) d'une session de communication (SP) en point à point avec le terminal pour la transmission des données (IHM).

3. Procédé selon la revendication 1, **caractérisé en ce que** l'étape de transmission desdites données est précédée d'une étape de connexion du dispositif et du terminal à un même réseau local utilisé pour la transmission des données (IHM).

4. Procédé selon la revendication 1, **caractérisé en ce que** l'étape de transmission (E16) d'une commande d'activation est précédée d'une étape d'obtention (E10) d'une demande de transmission de données associées au dispositif (IHM), ladite demande résultant d'une interaction entre l'utilisateur et le dispositif ;

5. Procédé selon la revendication 4, **caractérisé en ce que** ladite interaction est une action sur un actionneur (BTN) du dispositif.

6. Procédé selon la revendication 4, **caractérisé en ce que** ladite interaction est une détection de présence de l'utilisateur par un capteur du dispositif.

7. Procédé selon la revendication 4, **caractérisé en ce que** ladite interaction est un branchement sur un connecteur du dispositif.

8. Procédé selon la revendication 4, caractérisé en ce ladite interaction est une reconnaissance d'une signature sonore sur le dispositif.

9. Procédé de traitement de données associées à un dispositif (6) apte à communiquer avec plusieurs terminaux (4) d'utilisateur, les terminaux étant aptes à traiter et restituer lesdites données (IHM) via une application de traitement de données, le procédé étant mis en oeuvre par un processeur et comportant sur un terminal parmi lesdits plusieurs terminaux:
- une étape de réception d'une commande d'activation de l'application de restitution des données (P2), suivie d'une étape d'envoi d'une donnée d'identité du terminal au dispositif pour valider l'accès du terminal au dispositif, suivie d'une étape d'obtention (E5) desdites données en provenance du dispositif, si ledit accès est validé ; et
- une étape de restitution (E6) desdites données.

10. Dispositif électronique (6) apte à communiquer avec plusieurs terminaux (4) aptes à traiter et restituer des données (IHM) associées au dispositif via une application de restitution, comportant :
- un module de transmission aux terminaux d'une commande d'activation de l'application de restitution des données ;
- un module de réception d'une donnée d'identité d'un terminal parmi lesdits plusieurs terminaux pour valider l'accès du terminal au dispositif ;
- un module de transmission (COM2) desdites données (IHM) audit terminal (4), ledit module de transmission (COM2) étant configuré pour transmettre lesdites données (IHM) audit terminal (4), si ledit accès est validé, après la transmission au terminal de ladite commande d'activation par ledit module de transmission.

11. Passerelle domestique comportant un dispositif selon la revendication 10.

12. Terminal (4) de traitement de données (IHM) associées à un dispositif, comportant les modules suivants :
- un module de réception d'une commande d'activation d'une application de restitution des données (P2) ;
- un module d'envoi d'une donnée d'identité du terminal au dispositif pour valider l'accès du terminal au dispositif ;
- un module d'obtention (http, COM1) desdites données en provenance du dispositif (6), ledit module d'obtention étant configuré pour obtenir lesdites données après la réception de ladite commande d'activation par ledit module de réception si ledit accès est validé ; et,
- un module de restitution (RESTIT) desdites données.

13. Système comprenant un dispositif électronique selon la revendication 10 et au moins un terminal selon la revendication 12.

14. Programme d'ordinateur comportant des instructions de code pour la mise en oeuvre du procédé de gestion d'un dispositif électronique conforme à la revendication 1, lorsque celle-ci est exécutée par un processeur du dispositif électronique.

15. Programme d'ordinateur comportant des instructions de code pour la mise en oeuvre du procédé de traitement conforme à la revendication 9, lorsque celle-ci est exécutée par un processeur du terminal.

## Patentansprüche

1. Verfahren zur Steuerung einer Vorrichtung (6), die mit mehreren Anwenderendgeräten (4) kommunizieren kann, wobei die Endgeräte Daten (IHM), die der Vorrichtung zugeordnet sind, über eine Wiedergabeanwendung verarbeiten und wiedergeben können, wobei das Verfahren durch einen Prozessor ausgeführt wird, wobei das Verfahren an der Vorrichtung Folgendes umfasst,
- einen Schritt zur Übertragung eines Befehls zur Aktivierung der Anwendung zur Wiedergabe der Daten zu den Endgeräten (P2),
- in Reaktion auf die Übertragung des Aktivierungsbefehls einen Schritt zum Empfangen eines Datenelements der Identität eines Endgeräts, um den Zugriff des Endgeräts auf die Vorrichtung zu validieren, und
- einen Schritt zur Übertragung (E16) der Daten (IHM) zum Endgerät, wenn der Zugriff validiert wird.

2. Verfahren nach Anspruch 1, **dadurch gekennzeichnet, dass** dem Schritt der Übertragung (E16) der Daten ein Schritt zum Aufbauen (E11, E12) einer Punkt-zu-Punkt-Kommunikationssitzung (SP) mit dem Endgerät für die Übertragung der Daten (IHM) vorangeht.

3. Verfahren nach Anspruch 1, **dadurch gekennzeichnet, dass** dem Schritt der Übertragung der Daten ein Schritt zur Verbindung der Vorrichtung und des Endgeräts mit dem gleichen lokalen Netz vorangeht, das für die Übertragung der Daten (IHM) verwendet wird.

4. Verfahren nach Anspruch 1, **dadurch gekennzeichnet, dass** dem Schritt der Übertragung (E16) eines Aktivierungsbefehls ein Schritt zum Erhalten (E10) einer Anforderung zur Übertragung von Daten (IHM), die der Vorrichtung zugeordnet sind, vorangeht, wobei sich die Anforderung aus einer Wechselwirkung zwischen dem Anwender und der Vorrichtung ergibt.

5. Verfahren nach Anspruch 4, **dadurch gekennzeichnet, dass** die Wechselwirkung eine Einwirkung auf einen Aktuator (BTN) der Vorrichtung ist.

6. Verfahren nach Anspruch 4, **dadurch gekennzeichnet, dass** die Wechselwirkung eine Detektion der Anwesenheit des Anwenders durch einen Sensor der Vorrichtung ist.

7. Verfahren nach Anspruch 4, **dadurch gekennzeichnet, dass** die Wechselwirkung ein Anschluss an ein Verbindungselement der Vorrichtung ist.

8. Verfahren nach Anspruch 4, **dadurch gekennzeichnet, dass** die Wechselwirkung eine Erkennung einer Klangsignatur an der Vorrichtung ist.

9. Verfahren zur Verarbeitung von Daten, die einer Vorrichtung (6) zugeordnet sind, die mit mehreren Anwenderendgeräten (4) kommunizieren kann, wobei die Endgeräte die Daten (IHM) über eine Datenverarbeitungsanwendung verarbeiten und wiedergeben können, wobei das Verfahren durch einen Prozessor ausgeführt wird und an einem Endgerät unter den mehreren Endgeräten Folgendes umfasst:
- einen Schritt zum Empfangen eines Befehls zur Aktivierung der Anwendung zur Wiedergabe der Daten (P2), gefolgt von einem Schritt zum Senden eines Datenelements der Identität des Endgeräts zur Vorrichtung, um den Zugriff des Endgeräts auf die Vorrichtung zu validieren, gefolgt von einem Schritt zum Erhalten (E5) der Daten, die von der Vorrichtung stammen, wenn der Zugriff validiert wird; und
- einen Schritt zur Wiedergabe (E6) der Daten.

10. Elektronische Vorrichtung (6), die mit mehreren Endgeräten (4) kommunizieren kann, die Daten (IHM), die der Vorrichtung zugeordnet sind, über eine Wiedergabeanwendung verarbeiten und wiedergeben können, die Folgendes umfasst:
- ein Modul zur Übertragung eines Befehls zur Aktivierung der Anwendung zur Wiedergabe der Daten zu den Endgeräten;
- ein Modul zum Empfangen eines Datenelements der Identität eines Endgeräts unter den mehreren Endgeräten zum Validieren des Zugriffs des Endgeräts auf die Vorrichtung;
- ein Modul zur Übertragung (COM2) der Daten (IHM) zum Endgerät (4), wobei das Übertragungsmodul (COM2) konfiguriert ist zum Übertragen der Daten (IHM) zum Endgerät (4), wenn der Zugriff validiert wird, nach der Übertragung des Aktivierungsbefehls durch das Übertragungsmodul zum Endgerät.

11. Heim-Gateway mit einer Vorrichtung nach Anspruch 10.

12. Endgerät (4) zur Verarbeitung von Daten (IHM), die einer Vorrichtung zugeordnet sind, mit den folgenden Modulen:
- einem Modul zum Empfangen eines Befehls zur Aktivierung einer Anwendung zur Wiedergabe der Daten (P2);
- einem Modul zum Senden eines Datenelements der Identität des Endgeräts zur Vorrichtung, um den Zugriff des Endgeräts auf die Vorrichtung zu validieren;
- einem Modul (http, COM1) zum Erhalten der Daten, die von der Vorrichtung (6) stammen, wobei das Erhaltemodul konfiguriert ist zum Erhalten der Daten nach dem Empfang des Aktivierungsbefehls durch das Empfangsmodul, wenn der Zugriff validiert wird; und
- einem Modul zur Wiedergabe (RESTIT) der Daten.

13. System mit einer elektronischen Vorrichtung nach Anspruch 10 und mindestens einem Endgerät nach Anspruch 12.

14. Computerprogramm mit Codeanweisungen für die Ausführung des Verfahrens zur Steuerung einer elektronischen Vorrichtung nach Anspruch 1, wenn dieses durch einen Prozessor der elektronischen Vorrichtung ausgeführt wird.

15. Computerprogramm mit Codeanweisungen für die Ausführung des Verarbeitungsverfahrens nach Anspruch 9, wenn dieses durch einen Prozessor des Endgeräts ausgeführt wird.

## Claims

1. Method for managing a device (6) that is able to communicate with multiple user terminals (4), the terminals being able to process and render data (IHM) associated with the device via a rendering application, the method being performed by a processor, the method comprising, on the device:
- a step of transmitting to the terminals an activation command for activating the data rendering application (P2),
- in response to the transmission of the activation command, a step of receiving an identity datum from one terminal in order to validate the terminal's access to the device, and
- a step (E16) of transmitting said data (IHM) to said terminal if said access is validated.

2. Method according to Claim 1, **characterized in that** the step (E16) of transmitting said data is preceded by a step (E11, E12) of setting up a point-to-point communication session (SP) with the terminal in order to transmit the data (IHM).

3. Method according to Claim 1, **characterized in that** the step of transmitting said data is preceded by a step of connecting the device and the terminal to the same local area network used to transmit the data (IHM).

4. Method according to Claim 1, **characterized in that** the step (E16) of transmitting an activation command is preceded by a step (E10) of obtaining a request to transmit data associated with the device (IHM), said request resulting from an interaction between the user and the device.

5. Method according to Claim 4, **characterized in that** said interaction is an action on an actuator (BTN) of the device.

6. Method according to Claim 4, **characterized in that** said interaction is detection of the presence of the user by a sensor of the device.

7. Method according to Claim 4, **characterized in that** said interaction is connection to a connector of the device.

8. Method according to Claim 4, **characterized in that** said interaction is recognition of an audio signature on the device.

9. Method for processing data associated with a device (6) that is able to communicate with multiple user terminals (4), the terminals being able to process and render said data (IHM) via a data processing application, the method being performed by a processor and comprising, on one terminal among said multiple terminals:
- a step of receiving an activation command for activating the data rendering application (P2), followed by a step of sending an identity datum from the terminal to the device in order to validate the terminal's access to the device, followed by a step (E5) of obtaining said data from the device if said access is validated; and
- a step (E6) of rendering said data.

10. Electronic device (6) that is able to communicate with multiple terminals (4) that are able to process and render data (IHM) associated with the device via a rendering application, having:
- a transmitting module for transmitting to the terminals an activation command for activating the data rendering application;
- a receiving module for receiving an identity datum from one terminal among said multiple terminals in order to validate the terminal's access to the device;
- a transmitting module (COM2) for transmitting said data (IHM) to said terminal (4), said transmitting module (COM2) being configured to transmit said data (IHM) to said terminal (4), if said access is validated, after the transmission of said activation command to the terminal by said transmitting module.

11. Home gateway having a device according to Claim 10.

12. Terminal (4) for processing data (IHM) associated with a device, having the following modules:
- a receiving module for receiving an activation command for activating a data rendering application (P2);
- a sending module for sending an identity datum from the terminal to the device in order to validate the terminal's access to the device;
- an obtaining module (http, COM1) for obtaining said data from the device (6), said obtaining module being configured to obtain said data after said activation command is received by said receiving module if said access is validated; and
- a rendering module (RESTIT) for rendering said data.

13. System comprising an electronic device according to Claim 10 and at least one terminal according to Claim 12.

14. Computer program comprising code instructions for performing the method for managing an electronic device according to Claim 1 when said program is executed by a processor of the electronic device.

15. Computer program comprising code instructions for performing the processing method according to Claim 9 when said program is executed by a processor of the terminal.
